# EUROPEAN PATENT SPECIFICATION

(11) **EP 2 512 004 B1**
(45) Date of publication and mention of the grant of the patent: **16.03.2016**
(21) Application number: 11193471.7
(22) Date of filing: 14.12.2011
(51) Int. Cl.: H02J 9/00, H02J 9/04, H02M 3/28, G06K 19/07

(54) **Electronic device**
Elektronische Vorrichtung
Dispositif électronique

(30) Priority: 13.04.2011 TW 100112761
(43) Date of publication of application: 17.10.2012
(73) Proprietor: HannStar Display Corp., Wugu Dist. New Taipei City 248 (TW)
(72) Inventor: Weng, Bo Min, 711 Tainan City (TW)
(74) Representative: Puschmann Borchert Bardehle Patentanwälte Partnerschaft mbB

(56) References cited:
- US-A1- 2001 010 639
- US-A1- 2002 036 910
- US-A1- 2010 001 695

## Description

This disclosure generally relates to an electronic device and, more particularly, to an electronic device having low standby power consumption.

With the problems of global energy shortage and global warming becoming critical, all countries are actively developing new alternative energy sources and decreasing the total power consumption thereby reducing the creation of the amount of carbon dioxide, wherein the standby power consumption of various electronic devices is also involved in related standards.

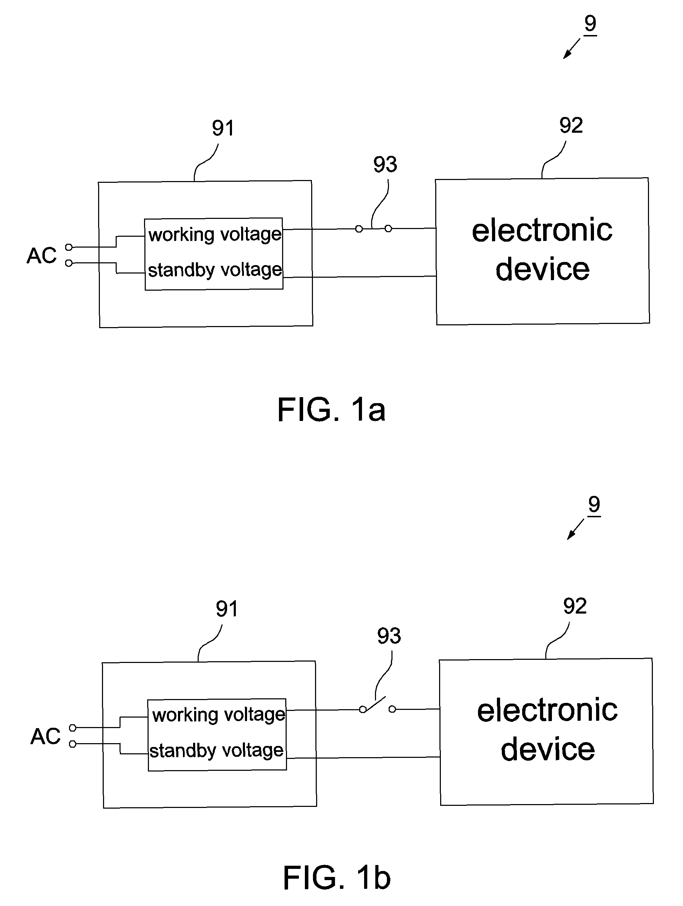

Generally speaking, the power circuit of an electronic product includes a main circuit and a standby circuit. For example, Figs. 1a and 1b show an electronic product 9 which includes a power circuit 91 and an electronic device 92. In normal operation (as shown in Fig. 1 a), a main circuit of the power circuit 91 provides a working voltage to the electronic device 92 through a switching element 93 such that the electronic device 92 can execute an operation desired by a user normally.

If no input signal is detected, the electronic product 9 will enter a standby state. At this moment, the electronic product 9 controls the switching element 93 to switch off to allow a standby circuit of the power circuit 91 to provide a standby voltage to the electronic device 92 (as shown in Fig. 1 b). Although most electronic products manufactured in these years can fulfill the standards of standby power consumption of every country, the global standby power consumption is gradually increasing as the total number of electronic products globally is enormous.

According to US 2001/010639, when an electronic unit is in a standby state, a standby circuit, such as a control microcomputer which receives a signal from a remote-control transmitter, is operated by an electric power supplied from an electricity accumulating section built in a power-supply circuit to make power consumption to zero in the standby state. In particular, a power-supply apparatus for an electronic unit is disclosed comprising a power-supply section for supplying electric power to a load, the power-supply section being connected to a commercially-available alternating power source through an electromagnetic relay and a power-supply switch provided with a button section which reports a status change by moving in a predetermined direction and which opens and closes contacts and a driving section for moving the button section in the opposite direction; an electricity accumulating section charged by the power-supply section, for supplying electric power at a standby state in which the commercially-available alternating power source is disconnected by the electromagnetic relay; and a control section for controlling the electromagnetic relay to enter the standby state and to receive electric power from the electricity accumulating section, when the control section decodes a received control signal and determines that the signal indicates a power-supply-stop instruction, and for controlling the driving section of the power-supply switch according to a voltage sent from the electricity accumulating section to move the button section in the opposite direction.

Accordingly, it is necessary to provide an electronic device that consumes almost no power in standby state.

For this purpose, the electronic device of the invention compriese the features of cllaim 1. Preferred embodiments of the invention are characterized in the sub-claims.

The present disclosure provides an electronic device that has zero standby power consumption in standby state.

The present disclosure further provides an electronic device including a power circuit, a charge-discharge device, a voltage regulator and a processing unit. The power circuit is configured to provide a standby voltage and includes a control switch for controlling output of the standby voltage. The charge-discharge device is coupled to the standby voltage and outputs a discharge voltage. The voltage regulator is coupled to the standby voltage or the discharge voltage and outputs an operation voltage. The processing unit is coupled to the operation voltage and includes a detection unit for detecting the discharge voltage outputted by the charge-discharge device to accordingly control on/off of the control switch when detecting that the discharge voltage is larger than a predetermined voltage, the detection unit controls the control switch to switch off; and when detecting that the discharge voltage is smaller than the predetermined voltage, the detection unit controls the control switch to switch on.

In an aspect, the processing unit further includes a counting unit. At least one of the detection unit and the counting unit is powered by the charge-discharge device or the processing unit.

The electronic device of the present disclosure includes a power circuit and a system circuit. The system circuit includes a processing unit and a charge-discharge device. The processing unit controls the power circuit to stop providing power to the system circuit when identifying that the electronic device enters a standby state and that a discharge voltage of the charge-discharge device is higher than a predetermined voltage thereby decreasing a standby power consumption of the electronic device.

Further advantages, features and potential applications of the present invention may be gathered from the description which follows, in conjunction with the embodiments illustrated in the drawings. Throughout the description, the claims and the drawings, those terms and associated reference signs will be used as are notable from the enclosed list of reference signs. In the drawings
- Fig. 1a: shows a schematic block diagram of a conventional electronic product in normal operation;
- Fig. 1b: shows a schematic block diagram of a conventional electronic product in standby state;
- Fig. 2: shows a schematic block diagram of the electronic device according to the first embodiment of the present disclosure;
- Fig. 3: shows a schematic block diagram of the electronic device according to the second embodiment of the present disclosure;
- Fig. 4: shows a schematic block diagram of the electronic device according to the third embodiment of the
- 10: present disclosure, and
- Fig. 5: shows a schematic block diagram of the electronic device according to the fourth embodiment of the present disclosure.

It should be noted that, wherever possible, the same reference numbers will be used throughout 15 the drawings to refer to the same or like parts. In the drawings of the present disclosure, only a part of the components are shown and other components that are not directly related to the present disclosure are omitted.

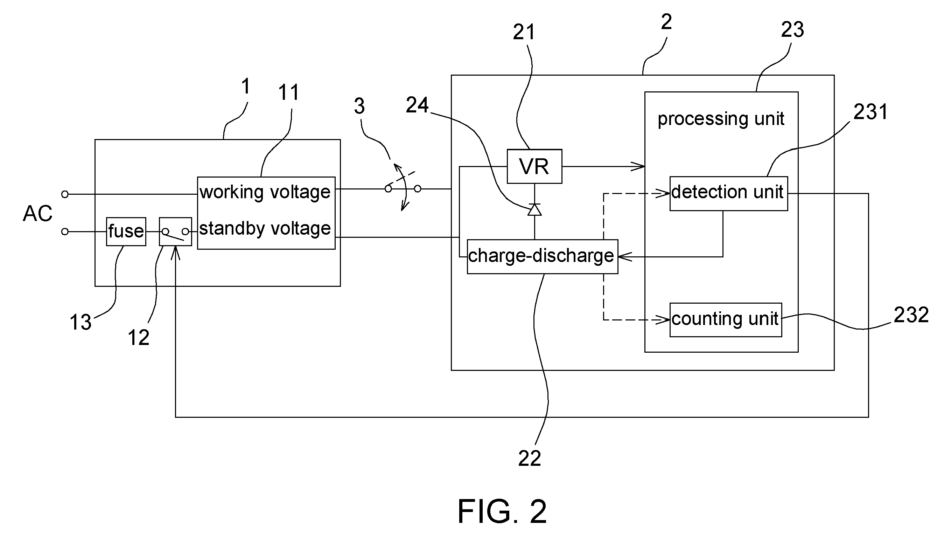

Please refer to Fig. 2, it shows a schematic block diagram of the electronic device according to the first embodiment of the present disclosure. Embodiments of the electronic device according to the 20 present disclosure may be a network TV, a smart TV or a traditional TV, but not limited thereto. The electronic device may include a power circuit 1 and a system circuit 2. The power circuit 1 and the system circuit 2 may be physically separated from but electrically coupled with each other, or may be manufactured in the same device or integrated on the same circuit board.

The power circuit 1 is coupled to between an AC power source and the system circuit 2, configured to convert AC power to DC power, and provides the DC power to the system circuit 2. When the electronic device is in normal operation, the power circuit 1 may provide a working voltage to the system circuit 2 through a switching element 3, wherein the working voltage may be 5 volts, 12 volts, 24 volts or other DC voltages used by general commercial electronic devices. When the electronic device enters a standby state, the switching element 3 is switched off and the power circuit 1 first provides a standby voltage to the system circuit 2. Then, the system circuit 2 determines whether to control the power circuit 1 to stop providing the standby voltage so as to reduce the standby power consumption to zero (described later), wherein the standby voltage maybe 5 volts, but not limited thereto. It is appreciated that when the electronic device enters the standby state, the system circuit 2 has to inform the power circuit 1 to provide the standby voltage and to control the switching element 3 to switch off at the same time. In addition, it should be mentioned that a method for identifying whether an electronic device is in standby state or in normal operation is well known, and thus details thereof will not be repeated herein. Descriptions below will be focused on the method of saving the standby power consumption when the electronic device enters the standby state, and details of the electronic device in normal operation will not be included.

The power circuit 1 includes a power supply unit 11, a control switch 12 and a fuse 13. The power supply unit 11 is configured to convert AC power to DC power and to provide a working voltage or a standby voltage, wherein which of the working voltage or the standby voltage is provided by the power supply unit 11 may be determined according to an operation state of the system circuit 2. In the present disclosure, when the electronic device enters the standby state, the control switch 12 is switched on or switched off (described later) under the control of the system circuit 2, and the power supply unit 11 may or may not provide the standby voltage to the system circuit 2. When the power supply unit 11 does not provide the standby voltage to the system circuit 2 in standby state, a standby power consumption of the electronic device is significantly decreased. The fuse 13 performs over-current protection on the electronic device.

The system circuit 2 includes a voltage regulator (VR) 21, a charge-discharge device 22 and a processing unit 23. The voltage regulator 21 is coupled to the working voltage or the standby voltage from the power circuit 1, or coupled to a discharge voltage of the charge-discharge device 22, and regulates the voltage coupled thereto to an operation voltage required by the processing unit 23. The charge-discharge device 22 may be a rechargeable battery, which is charged by the standby voltage outputted by the power circuit 1 and serves as a standby power source of the processing unit 23 and elements therein in standby state. The processing unit 23 may be, for example, a system control circuit or a control chip, which includes a detection unit 231 and a counting unit 232. The detection unit 231 is configured to detect whether the discharge voltage of the charge-discharge device 22 is higher than a predetermined voltage thereby controlling on/off of the control switch 12 of the power circuit 1. The counting unit 232 performs counting function in standby state, e.g. for reserve-recording, but not limited thereto. In standby state, the detection unit 231 and the counting unit 232 may be powered by the processing unit 23 or directly powered by the charge-discharge device 22. Next, the operation of every element when the electronic device enters the standby state will be described hereinafter. In other embodiments, in standby state at least one element in the processing unit 23, e.g. the detection unit 231 and/or the counting unit 232, may be directly powered by the charge-discharge device 22.

When the processing unit 23 identifies that the electronic device enters the standby state, the processing unit 23 controls the switching element 3 to switch off and controls the control switch 12 to switch on such that the power supply unit 11 may provide the standby voltage to the system circuit 2.

The voltage regulator 21 regulates the standby voltage to the operation voltage required by the processing unit 23 and then inputs the operation voltage to the processing unit 23, and the standby voltage charges the charge-discharge device 22 simultaneously.

Next, the detection unit 231 detects the discharge voltage of the charge- discharge device 22 and identifies whether the discharge voltage is larger than the predetermined voltage. When the discharge voltage of the charge-discharge device 22 is larger than the predetermined voltage, it means that the charge- discharge device 22 stores enough power for supporting the standby operation of the processing unit 23 and the detection unit 231 informs the control switch 12 of the power circuit 1 to switch off such that the standby power consumption of the electronic device is reduced to zero.

When the control switch 12 is switched off, the system circuit 2 does not receive the standby voltage provided from the power circuit 1. At the moment, the charge-discharge device 22 provides power to the voltage regulator 21, and the voltage regulator 21 regulates the discharge voltage outputted by the charge-discharge device 22 to the operation voltage required by the processing unit 23 and then inputs the operation voltage to the processing unit 23. Meanwhile, the charge-discharge device 22 may directly provide power to the detection unit 231 and/or the counting unit 232 (as shown by the dashed line). It should be mentioned that, although the control switch 12 of the power circuit 1 is shown to be disposed at an input terminal of the power supply unit 11 in this embodiment, the control switch 12 may also be disposed at any appropriate place, for example, an output terminal of or integrated in the power supply unit 11 in other embodiments.

On the other hand, when the discharge voltage of the charge-discharge device 22 is smaller than the predetermined voltage, it means that the charge- discharge device 22 does not store enough power for supporting the standby operation of the processing unit 23, and the detection unit 231 controls the control switch 12 of the power circuit 1 to switch on continuously such that the power supply unit 11 may provide the standby voltage to the voltage regulator 21 and charge the charge-discharge device 22. Meanwhile, the detection device 231 continuously detects the discharge voltage of the charge-discharge device 22. When detecting that the discharge voltage of the charge-discharge device 22 is larger than the predetermined voltage, the detection unit 231 informs the control switch 12 to switch off thereby eliminating the standby power consumption. In this embodiment, the system circuit 2 may further include an AND gate 24 coupled to between the voltage regulator 21 and the charge-discharge device 22. When a voltage difference on the AND gate 24 is larger than its breakover voltage, the charge-discharge device 22 is able to provide power to the voltage regulator 21. On the contrary, when the voltage difference on the AND gate 24 is smaller than its breakover voltage, the charge-discharge device 22 is not able to provide power to the voltage regulator 21. In addition, the power consumption of the detection unit 231 and the counting unit 232 in standby state may be provided by the processing unit 23 or directly provided by the charge-discharge device 22.

In the present disclosure, as the system circuit 2 includes the charge- discharge device 22, all standby power of the processing unit 23 in standby state may be provided by the charge-discharge device 22. In addition, as the system circuit 2 includes the detection unit 231 to detect the power stored in the charge-discharge device 22, it is able to prevent the power stored in the charge- discharge device 22 from being entirely consumed to cause the processing unit 23 unable to support the standby operation when the standby state lasts for a long time.

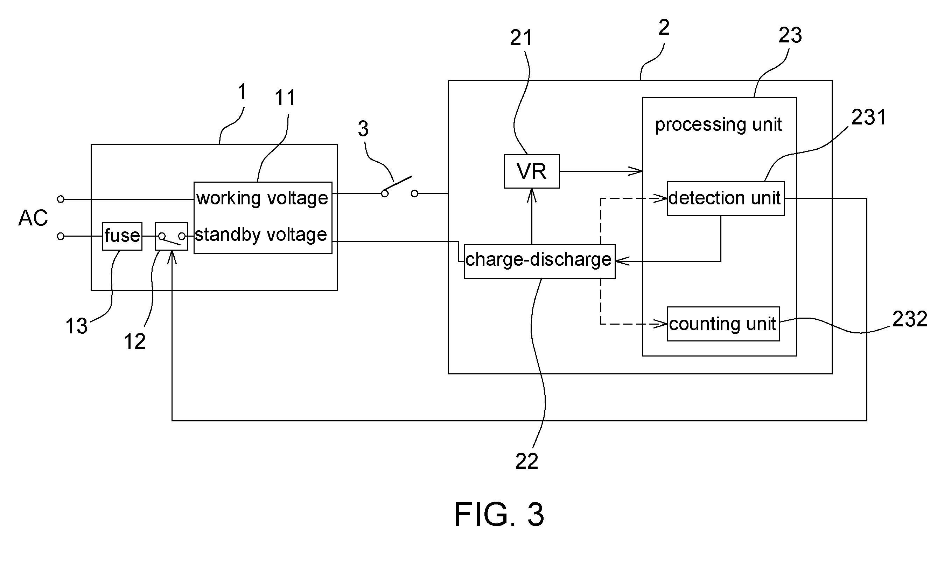

Please refer to Fig. 3, it shows a schematic block diagram of the electronic device in standby state according to the second embodiment of the present disclosure. The difference between the electronic device of the second embodiment and that of the first embodiment is that the power circuit 1 is only coupled to the charge-discharge device 22 without being coupled to the voltage regulator 21. In other words, consuming power of the processing unit 23 is totally provided through the charge-discharge device 22. The voltage regulator 21 regulates a discharge voltage provided by the charge-discharge device 22 to an operation voltage required by the processing unit 23 and then inputs the operation voltage to the processing unit 23.

When identifying that the electronic device enters a standby state, the processing unit 23 controls the switching element 3 to switch off and controls the control switch 12 to switch on to allow the power supply unit 11 to provide a standby voltage to the system circuit 2.

The standby voltage charges the charge-discharge device 22, and the voltage regulator 21 regulates the discharge voltage outputted by the charge- discharge device 22 to the operation voltage required by the processing unit 23 and then inputs the operation voltage to the processing unit 23.

Next, the detection unit 231 detects the discharge voltage of the charge- discharge device 22 and identifies whether the discharge voltage is larger than a predetermined voltage. When the discharge voltage of the charge-discharge device 22 is larger than the predetermined voltage, the detection unit 231 informs the control switch 12 of the power circuit 1 to switch off such that the standby power consumption of the electronic device is reduced to zero. It should be mentioned that although the control switch 12 of the power circuit 1 is shown to be disposed at an input terminal of the power supply unit 11 in this embodiment, the control switch 12 may be disposed at an output terminal of or integrated in the power supply unit 11 in other embodiments.

When the control switch 12 is switched off, the charge-discharge device 22 provides power to the voltage regulator 21, and the voltage regulator 21 regulates the discharge voltage provided by the charge-discharge device 22 to the operation voltage required by the processing unit 23 and then inputs the operation voltage to the processing unit 23. Meanwhile, the charge-discharge device 22 may also directly provide power to the detection unit 231 and/or the counting unit 232 (as shown by the dashed line).

On the other hand, when the discharge voltage of the charge-discharge device 22 is smaller than the predetermined voltage, the detection unit 231 controls the control switch 12 of the power circuit 1 to switch on continuously to allow the power supply unit 11 to charge the charge-discharge device 22 and to provide the standby power required by the processing unit 23. Meanwhile, the detection unit 231 continuously detects the discharge voltage of the charge- discharge device 22 and informs the control switch 12 to switch off when detecting that the discharge voltage of the charge-discharge device 22 is larger than the predetermined voltage. When the control switch 12 is switched off, the AC power source will not be provided to the power supply unit 11 and the power circuit 1 does not consume any power from the AC power source at this moment. In this manner, it is able to effectively eliminate the total standby power consumption of the electronic device. In addition, the power consumption of the detection unit 231 and the counting unit 232 in standby state may be provided by the processing unit 23 (now the power consumption of the processing unit 23 is provided by the voltage regulator 21), or directly provided by the charge- discharge device 22 without passing through other elements of the processing unit 23.

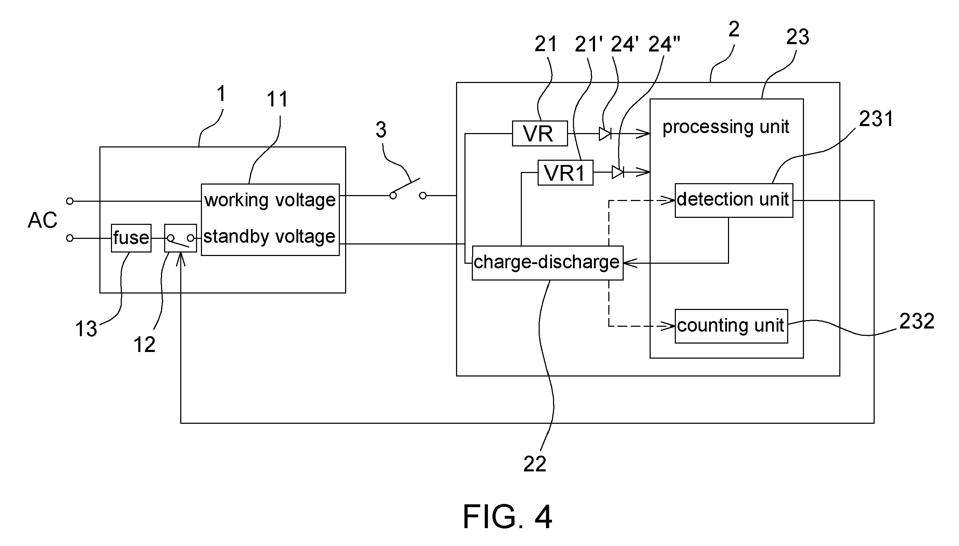

Please refer to Fig. 4, it shows a schematic block diagram of the electronic device in standby state according to the third embodiment of the present disclosure. The difference between the electronic device of the third embodiment and that of the first embodiment is that the system circuit 2 includes a voltage regulator (VR) 21 and a first voltage regulator (VR1) 21'. In addition, the system circuit 2 further includes a first AND gate 24' and a second AND gate 24", wherein when voltage differences on the first AND gate 24' and the second AND gate 24" are larger than their breakover voltages, the first AND gate 24' and the second AND gate 24" are turned on. The first AND gate 24' is coupled to between the voltage regulator 21 and the processing unit 23, and the second AND gate 24" is coupled to between the first voltage regulator 21' and the processing unit 23. When the electronic device is in standby state and the charge-discharge device 22 stores enough power (i.e. the discharge voltage is larger than the predetermined voltage) for providing power to the processing unit 23, the standby voltage is not outputted by the power supply unit 11 (i.e. the control switch 12 is switched off), and thus the first AND gate 24' is off but the second AND gate 24" is on. When the electronic device is in standby state but the charge-discharge device 22 does not store enough power (i.e. the discharge voltage is smaller than the predetermined voltage) for providing power to the processing unit 23, the control switch 12 is continuously switched on. At the moment, the power supply unit 11 outputs the standby voltage, and thus the first AND gate 24' is on but the second AND gate 24" is off.

When identifying that the electronic device enters the standby state, the processing unit 23 controls the switching element 3 to switch off and controls the control switch 12 to switch on to allow the power supply unit 11 to provide a standby voltage to the system circuit 2.

The voltage regulator 21 regulates the standby voltage to an operation voltage required by the processing unit 23 and then inputs the operation voltage to the processing unit 23. The standby voltage charges the charge-discharge device 22 simultaneously.

Next, the detection unit 231 detects a discharge voltage of the charge- discharge device 22 and identifies whether the discharge voltage is larger than a predetermined voltage. When the discharge voltage of the charge-discharge voltage 22 is larger than the predetermined voltage, the detection unit 231 informs the control switch 12 of the power circuit 1 to switch off such that the standby power consumption of the electronic device is reduced to zero.

When the control switch 12 is switched off, the first AND gate 24' is off but the second AND gate 24" is on. The charge-discharge device 22 provides power to the first voltage regulator 21', and the first voltage regulator 21' regulates the discharge voltage provided by the charge-discharge device 22 to the operation voltage required by the processing unit 23 and then inputs the operation voltage to the processing unit 23. Meanwhile, the charge-discharge device 22 may directly provide power to the detection unit 231 and/or the counting unit 232.

On the other hand, when the discharge voltage of the charge-discharge device 22 is smaller than the predetermined voltage, the detection unit 231 controls the control switch 12 of the power circuit 1 to continuously switch on to allow the power supply unit 11 to provide the standby voltage to the voltage regulator 21 and charge the charge-discharge device 22. At the moment the first AND gate 24' is on but the second AND gate 24" is off. Meanwhile, the detection unit 231 continuously detects the discharge voltage of the charge- discharge device 22 and informs the control switch 22 to switch off when identifying that the discharge voltage of the charge-discharge device 22 is larger than the predetermined voltage so as to eliminate the standby power consumption. In addition, the power consumption of the detection unit 231 and the counting unit 232 in standby state may be provided by the processing unit 23 or directly provided by the charge-discharge device 22.

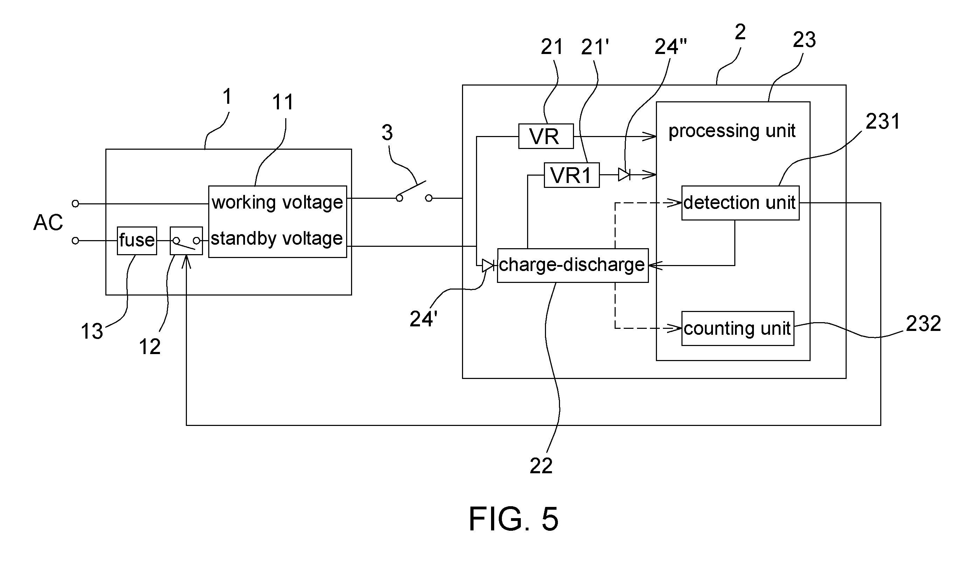

Please refer to Fig. 5, it shows a schematic block diagram of the electronic device in standby state according to the fourth embodiment of the present disclosure. The difference between the fourth embodiment and third embodiment is that the first AND gate 24' is coupled at an input terminal of the charge-discharge device 22. When a discharge voltage of the charge-discharge device 22 is larger than a predetermined voltage, a standby voltage will not be outputted by the power supply unit 11, i.e. the system circuit 2 will not receive power from the power circuit 1. At the moment the second AND gate 24" is on but the first AND gate 24' is off. The charge-discharge device 22 may provide power to the processing unit 23 through the first voltage regulator 21' and the second AND gate 24". When the discharge voltage of the charge-discharge device 22 is smaller than the predetermined voltage, the control switch 12 is switched on and the power supply unit 11 outputs the standby voltage to the system circuit 2. At the moment the first AND gate 24' is on but the second AND gate 24" is off. The standby voltage charges the charge-discharge device 22 through the first AND gate 24' and provides power to the processing unit 23 through the voltage regulator 21. In addition, connections and operations of other components in the fourth embodiment are similar to those in the third embodiment, and thus details thereof will not be repeated herein. In another embodiment, the second AND gate 24" may not be implemented.

As mentioned above, conventional electronic devices will more or less consume power in standby state. The present disclosure further provides an electronic device (Figs. 2 to 5) that may be applied to video equipments such as a television, but not be limited thereto. The electronic device of the present disclosure includes a charge- discharge device to provide power required by the electronic device in standby state such that the standby power consumption from commercial power source is almost zero. Furthermore, a detection mechanism is incorporated to prevent the storage power of the charge-discharge device is totally consumed such that the electronic device can still perform normal standby operation even the standby state lasts for a long time.

Although the disclosure has been explained in relation to its preferred embodiment, it is not used to limit the disclosure. It is to be understood that many other possible modifications and variations can be made by those skilled in the art without departing from the scope of the disclosure as hereinafter claimed.

### List of reference signs

- 1: power circuit
- 2: system circuit
- 3: switching element
- 9: electronic product
- 11: power supply unit
- 12: control switch
- 13: fuse
- 21: voltage regulator
- 21': first voltage regulator
- 22: charge-discharge device
- 23: processing unit
- 24: AND gate
- 24': first AND gate
- 24": second AND gate
- 91: power circuit
- 92: electronic device
- 93: switching element
- 231: detection unit
- 232: counting unit

- AC: power

## Claims

1. An electronic device, comprising:
a power circuit (1), configured to provide a standby voltage in a standby state and comprising a control switch (12) for controlling output of the standby voltage;
a charge-discharge device (22), coupled to the standby voltage and configured to output a discharge voltage;
a voltage regulator (21), configured to output an operation voltage; and
a processing unit (23), coupled to the operation voltage and comprising a detection unit (231) for detecting the discharge voltage outputted by the charge-discharge device (22) to accordingly control on/off of the control switch (12), **characterized in that**
the voltage regulator (21) is coupled between the charge-discharge device (22) and the processing unit (23) configured to regulate the discharge voltage outputted by the charge-discharge device (22) to the operation voltage and coupled between the power circuit (1) and the processing unit (23) configured to regulate the standby voltage outputted by the power circuit (1) to the operation voltage, and
in the standby state, the control switch (12) is switched on when the discharge voltage is smaller than a predetermined voltage to allow the standby voltage to charge the charge-discharge device (22) and the control switch (12) is switched off when the discharge voltage is larger than the predetermined voltage to allow the charge-discharge device (22) to output the discharge voltage.

2. The electronic device as claimed in claim 1, wherein processing unit (23) further comprises a counting unit (232), and at least one of the detection unit (231) and the counting unit (232) is powered by the charge-discharge device (22) or the processing unit (23).

3. The electronic device as claimed in claim 1, wherein when the detection device unit (231) detects that the discharge voltage is larger than the predetermined voltage, the charge-discharge device (22) provides the discharge voltage to the voltage regulator (21).

4. The electronic device as claimed in claim 1, wherein the standby voltage is simultaneously provided to the voltage regulator (21) and the charge-discharge device (22) when the detection device unit (231) detects that the discharge voltage is smaller than the predetermined voltage.

5. The electronic device as claimed in claim 4, further comprising an AND gate (24) coupled to between the charge-discharge device (22) and the voltage regulator (21) for stopping the charge-discharge device (22) providing power to the voltage regulator (21) when the discharge voltage is smaller than the predetermined voltage.

6. The electronic device as claimed in claim 1, further comprising a first voltage regulator (21'), a first AND gate (24') and a second AND gate (24"); wherein the first voltage regulator (21') is coupled to between the charge-discharge device (22) and the processing unit (23), and is configured to output the operation voltage; the first AND gate (24') is coupled to between the voltage regulator (21) and the processing unit (23) for controlling output of the operation voltage or is coupled to an input terminal of the charge-discharge device (22); and the second AND gate (24") is coupled to between the first voltage regulator (21') and the processing unit (23) for controlling output of the operation voltage.

7. The electronic device as claimed in claim 6, wherein when the detection unit (231) detects that the discharge voltage is larger than a predetermined voltage, the detection unit (231) controls the control switch (12) to switch off, and the first AND gate (24') is off and the second AND gate (24") is on.

8. The electronic device as claimed in claim 6, wherein when the detection device unit (231) detects that the discharge voltage is smaller than a predetermined voltage, the detection device unit (231) controls the control switch (12) to switch on, and the first AND gate (24') is on and the second AND gate (24") is off.

9. The electronic device as claimed in claim 1, wherein the voltage regulator (21) is coupled to the discharge voltage without being coupled to the standby voltage.

10. The electronic device, according to any of the claims 1, 2, 4, 5, 7 to 9, wherein
the charge-discharge device (22), configured to output a discharge voltage;
the voltage regulator (21), coupled to the standby voltage or the discharge voltage and used for outputting an operation voltage; and
the processing unit (23), coupled to the operation voltage and comprising a detection unit (231), wherein the detection unit (231) is for detecting the discharge voltage outputted by the charge-discharge device (22) to accordingly control on/off of the control switch (12), are included in a system circuit (2).

11. The electronic device as claimed in claim 10, wherein the system circuit (2) further comprises an AND gate (24) coupled to between the charge-discharge device (22) and the voltage regulator (21) for stopping the charge-discharge device (22) providing power to the voltage regulator (21) when the discharge voltage is smaller than the predetermined voltage.

12. The electronic device as claimed in claim 10, wherein the system circuit (2) further comprises a first voltage regulator (21'), a first AND gate (24') and a second AND gate (24"); the first voltage regulator (21') is coupled to between the charge-discharge device (22) and the processing unit (23), and is configured to output the operation voltage; the first AND gate (24') is coupled to between the voltage regulator (21) and the processing unit (23) for controlling output of the operation voltage or is coupled to an input terminal of the charge-discharge device (22); and the second AND gate (24") is coupled to between the first voltage regulator (21') and the processing unit (23) for controlling output of the operation voltage.

## Patentansprüche

1. Elektronische Vorrichtung umfassend:
eine Leistungsschaltung (1), die konfiguriert ist, um eine Standby-Spannung in einem Standby-Zustand zu liefern und die einen Steuerschalter (12) umfasst, um den Ausgang der Standby-Spannung zu steuern;
eine Lade-Entlade-Einrichtung (22), die an die Standby-Spannung gekoppelt und konfiguriert ist, eine Ladespannung abzugeben;
einen Spannungsregler (21), der konfiguriert ist, um eine Ausgangsspannung abzugeben; und
eine Verarbeitungseinheit (23), die an die Betriebsspannung gekoppelt ist und eine Detektoreinheit (231) aufweist, um die Entladespannung zu detektieren, die von der Lade-Entlade-Einrichtung (22) ausgegeben wird, um das EIN/AUS des Steuerschalters (12) entsprechend zu steuern, **dadurch gekennzeichnet, dass** der Spannungsregler (21) zwischen der Lade-Entlade-Einrichtung (22) und der Verarbeitungseinheit (23) angekoppelt ist, die konfiguriert ist um die Entladespannung, die von der Lade-Entlade-Einrichtung (22) ausgegeben wird, auf eine Betriebsspannung zu regeln und die zwischen der Leistungsschaltung (1) und der Verarbeitungseinheit (23) angekoppelt ist, die konfiguriert ist,
um die Standby-Spannung, die von der Leistungsschaltung (1) ausgegeben wird, auf die Betriebsspannung zu regeln, und wobei
in dem Standby-Zustand der Steuerschalter (12) auf EIN geschaltet wird, wenn die Entladespannung kleiner ist als eine vorgegebene Spannung, um es der Standby-Spannung zu gestatten, die Lade-Entlade-Einrichtung (22) zu laden, und der Steuerschalter (12) auf AU geschaltet wird, wenn die Entladespannung größer ist als die vorgegebene Spannung, um es der Lade-Entlade-Einrichtung (22) zu gestatten, die Entladespannung auszugeben.

2. Elektronische Vorrichtung nach Anspruch 1, worin die Verarbeitungseinheit (23) ferner eine Zählereinheit (232) und wobei die Detektoreinheit (231) und/oder die Zählereinheit (232) durch die Lade-Entlade-Einrichtung (22) oder die Verarbeitungseinheit (23) mit Strom versorgt wird.

3. Elektronische Vorrichtung nach Anspruch 1, worin, wenn die Detektoreinrichtungseinheit (231) detektiert, dass die Entladespannung größer ist als die vorgegebene Spannung, die Lade-Entlade-Einrichtung (22) die Entladespannung an den Spannungsregler (21) liefert.

4. Elektronische Vorrichtung nach Anspruch 1, worin die Standby-Spannung gleichzeitig an den Spannungsregler (21) und die Lade-Entlade-Einrichtung (22) geliefert wird, wenn die Detektoreinrichtungseinheit (231) detektiert, dass die Entladespannung kleiner ist als die vorgegebene Spannung.

5. Elektronische Vorrichtung nach Anspruch 4, ferner umfassend ein UND-Gatter (24), das zwischen der Lade-Entlade-Einrichtung (22) und dem Spannungsregler angekoppelt ist, um die Lade-Entlade-Einrichtung (22) beim Liefern vom Strom an den Spannungsregler (21) zu stoppen, wenn die Entladespannung kleiner ist als die vorgegebene Spannung.

6. Elektronische Vorrichtung nach Anspruch 1, ferner umfassend einen ersten Spannungsregler (21'), ein erstes UND-Gatter (24') und ein zweites UND-Gatter (24"), wobei der erste Spannungsregler (21') zwischen der Lade-Entlade-Einrichtung (22) und der Verarbeitungseinheit (23) angekoppelt ist und konfiguriert ist, um die Betriebsspannung auszugeben; wobei das erste UND-Gatter (24') zwischen dem Spannungsregler (21) und der Verarbeitungseinheit (23) angekoppelt ist, um den Ausgang der Betriebsspannung zu steuern, oder an einen Eingangsanschluss der Lade-Entlade-Einrichtung (22) gekoppelt ist, und wobei das zweite UND-Gatter (24") zwischen dem ersten Spannungsregler (21') und der Verarbeitungseinheit (23) angekoppelt ist, um die Abgabe der Betriebsspannung zu steuern.

7. Elektronische Vorrichtung nach Anspruch 6, worin, wenn die Detektoreinheit (231) detektiert, dass die Entladespannung größer ist als eine vorgegebene Spannung, die Detektoreinheit (231) den Steuerschalter (12) steuert, um ihn auszuschalten, und das erste UND-Gatter (24') ausgeschaltet und das zweite UND-Gatter (24") eingeschaltet ist.

8. Elektronische Vorrichtung nach Anspruch 6, worin, wenn die Detektoreinrichtungseinheit (231) detektiert, dass die Entladespannung kleiner ist als eine vorgegebene Spannung, die Detektoreinrichtungseinheit (231) den Steuerschalter (12) steuert, um ihn einzuschalten, und wobei das erste UND-Gatter (24') eingeschaltet und das zweite UND-Gatter (24") ausgeschaltet ist.

9. Elektronische Vorrichtung nach Anspruch 1, worin der Spannungsregler (21) an die Entladespannung gekoppelt ist ohne an die Standbyspannung gekoppelt zu sein.

10. Elektronische Schaltung nach einem der Ansprüche 1, 2, 4, 5, 7 bis 9, wobei die Lade-Entlade-Einrichtung (22), die konfiguriert ist, um eine Entladespannung auszugeben;
der Spannungsregler (21), der an die Standbyspannung oder die Entladespannung gekoppelt ist und zum Ausgeben einer Betriebsspannung verwendet wird;
und die Recheneinheit (23), die an die Betriebsspannung gekoppelt ist und eine Detektoreinheit (231) umfasst, wobei die Detektoreinheit (231) zur Detektion der Entlade-Spannung ist, die von der Lade-Entlade-Einrichtung (22) ausgegeben wird, um das EIN/AUS des Steuerschalters (12) entsprechend zu steuern, in einer Systemschaltung (2) enthalten sind.

11. Elektronische Vorrichtung nach Anspruch 10, worin die Systemschaltung (2) ferner ein UND-Gatter (24) umfasst, das zwischen der Lade-Entlade-Einrichtung (22) und dem Spannungsregler angekoppelt ist, um die Lade-Entlade-Einrichtung (22) bei der Lieferung von Strom an den Spannungsregler (21) zu stoppen, wenn die Entladespannung kleiner ist als die vorgegebene Spannung.

12. Elektronische Vorrichtung nach Anspruch 10, worin die Systemschaltung (2) ferner einen ersten Spannungsregler (21'), ein erster UND-Gatter (24') und ein zweites UND-Gatter (24") umfasst, wobei der erste Spannungsregler (21') zwischen der Lade-Entlade-Einrichtung (22) und der Verarbeitungseinheit (23) angekoppelt konfiguriert ist, die Betriebsspannung auszugeben; wobei das erste UND-Gatter (24') zwischen dem Spannungsregler (21) und der Recheneinheit (23) angekoppelt ist, um den Ausgang der Betriebsspannung zu steuern, oder mit einem Eingangsanschluss der Lade-Entlade-Einrichtung (22) gekoppelt ist; und wobei das zweite UND-Gatter (24") zwischen dem ersten Spannungsregler (21') und der Verarbeitungseinheit (23) angekoppelt ist, um den Ausgang der Betriebsspannung zu steuern.

## Revendications

1. Dispositif électronique comprenant :
un circuit électrique (1), configuré afin de fournir une tension de veille dans un état de veille et comprenant un commutateur de contrôle (12) pour contrôler la sortie de la tension de veille ; un dispositif de charge/décharge (22), couplé à la tension de veille et configuré pour fournir en sortie une tension de décharge ;
un régulateur de tension (21), configuré pour fournir en sortie une tension de fonctionnement ; et
une unité de traitement (231) couplée à la tension de fonctionnement et comprenant une unité de traitement (231) pour détecter la tension de décharge fournie en sortie par le dispositif de charge et de décharge (22) en vue de contrôler en conséquence la mise sous tension/hors tension du commutateur de contrôle (12) **caractérisé en ce que**
le régulateur de tension (21) est couplé entre le dispositif de charge et de décharge (22) et l'unité de traitement (23) configurée en vue de réguler la tension de décharge fournie en sortie par le dispositif de charge et de décharge (22) en une tension de fonctionnement, et couplé entre le circuit électrique (1) et l'unité de traitement (23) configurée en vue de réguler la tension de veille fournie en sortie par le circuit électrique (1) en la tension de fonctionnement et
dans l'état de veille, le commutateur de contrôle (12) est mis sous tension quand la tension de décharge est inférieure à une tension prédéterminée pour permettre à la tension de veille de charger le dispositif de charge et de décharge (22) et le commutateur de contrôle (12) est désactivé quand la tension de décharge est supérieure à la tension prédéterminée pour permettre au dispositif de charge et de décharge (22) de fournir en sortie la tension de décharge.

2. Dispositif électronique selon la revendication 1, l'unité de traitement (23) comprenant en outre une unité de comptage (232) et au moins l'un de l'unité de détection (231) et de l'unité de comptage (232) est alimenté par le dispositif de charge et de décharge (22) ou par l'unité de traitement (23).

3. Dispositif électronique selon la revendication 1, **caractérisé par le fait que** quand l'unité du dispositif de détection (231) détecte que la tension de décharge est supérieure à la tension prédéterminée, le dispositif de charge et de décharge (22) fournit la tension de décharge au régulateur de tension (21).

4. Dispositif électronique selon la revendication 1, dans lequel la tension de veille est simultanément fournie au régulateur de tension (21) et au dispositif de charge et de décharge (22) quand l'unité du dispositif de détection (231) détecte que la tension de décharge est inférieure à la tension prédéterminée.

5. Dispositif électronique selon la revendication 4, comprenant en outre une fonction ET (24) couplée à celui-ci entre le dispositif de charge et de décharge (22) et le régulateur de tension (21) pour arrêter le dispositif de charge et de décharge (22) d'alimenter le régulateur de tension (21) quand la tension de décharge est inférieure à la tension prédéterminée.

6. Dispositif électronique selon la revendication 1, comprenant en outre un premier régulateur de tension (21'), une première fonction ET (24') et une deuxième fonction ET (24") ; dans lequel le premier régulateur de tension (21') y est couplé entre le dispositif de charge et de décharge (22) et l'unité de traitement (23) et est configuré pour fournir en sortie la tension de fonctionnement ; la première fonction ET (24') y est couplée entre le régulateur de tension (21) et l'unité de traitement (23) pour contrôler la sortie de la tension de fonctionnement ou est couplée à un terminal d'entrée du dispositif de charge et de décharge (22) ; et la deuxième fonction ET (24") y est couplée entre le premier régulateur de tension (21') et l'unité de traitement (23) pour contrôler sortie la tension de fonctionnement.

7. Dispositif électronique selon la revendication 6, dans lequel quand l'unité du dispositif de détection (231) détecte que la tension de décharge est supérieure à une tension prédéterminée, l'unité du dispositif de détection (231) contrôle la mise hors tension du commutateur de contrôle (12) et la première fonction ET (24') est éteinte et la deuxième fonction ET (24") est allumée.

8. Dispositif électronique selon la revendication 6, dans lequel quand l'unité du dispositif de détection (231) détecte que la tension de décharge est inférieure à une tension prédéterminée, l'unité du dispositif de détection (231) contrôle la mise sous tension du commutateur de contrôle (12) et la première fonction ET (24') est allumée et la deuxième fonction ET (24") est éteinte.

9. Dispositif électronique selon la revendication 1, dans lequel le régulateur de tension (21) est couplé à la tension de décharge sans être couplé à la tension de veille.

10. Dispositif électronique selon l'une quelconque des revendications 1, 2, 4, 5, 7 à 9, dans lequel le dispositif de charge et de décharge (22), configuré pour fournir en sortie une tension de décharge ;
le régulateur de tension (21) couplé à la tension de veille ou à la tension de décharge et utilisé pour fournir en sortie une tension de fonctionnement ; et l'unité de traitement (23), couplée à la tension de fonctionnement et comprenant une unité de détection (231), l'unité de détection (231) étant destinée à détecter la tension de décharge fournie en sortie par le dispositif de charge et de décharge (22) en vue de contrôler la mise sous tension/hors tension du commutateur de contrôle (12), sont inclus dans un circuit de système (2).

11. Dispositif électronique selon la revendication 10, dans lequel le circuit de système (2) comprend en outre une fonction ET (24) couplée à celui-ci entre le dispositif de charge et de décharge (22) et le régulateur de tension (21) pour arrêter le dispositif de charge et de décharge (22) d'alimenter le régulateur de tension en électricité (21) quand la tension de décharge est inférieure à la tension prédéterminée.

12. Dispositif électronique selon la revendication 10, dans lequel le circuit de système (2) comprend en outre un premier régulateur de tension (21'), une première fonction ET (24') et une deuxième fonction ET (24") ; le premier régulateur de tension (21') y est couplé entre le dispositif de charge et de décharge (22) et l'unité de traitement (23) et est configuré en vue de fournir en sortie la tension de fonctionnement ; la première fonction ET (24') y est couplée entre le régulateur de tension (21) et l'unité de traitement (23) pour contrôler en sortie la tension de fonctionnement ou est couplée à un terminal d'entrée du dispositif de charge et de décharge (22) ; et la deuxième fonction ET (24") y est couplée entre le premier régulateur de tension (21') et l'unité de traitement (23) pour contrôler en sortie la tension de fonctionnement.
